# EUROPÄISCHE PATENTSCHRIFT

(11) **EP 3 724 529 B1**
(45) Veröffentlichungstag und Bekanntmachung des Hinweises auf die Patenterteilung: **18.08.2021**
(21) Anmeldenummer: 18812104.0
(22) Anmeldetag: 26.11.2018
(51) Int. Cl.: F16D 23/06

(54) **GANGSCHALTKUPPLUNG FÜR EIN FAHRZEUGGETRIEBE**
GEAR SHIFTING COUPLING FOR A VEHICLE TRANSMISSION
EMBRAYAGE DE CHANGEMENT DE VITESSES POUR BOÎTE DE VITESSES DE VÉHICULE

(30) Priorität: 11.12.2017 DE 102017222346
(43) Veröffentlichungstag der Anmeldung: 21.10.2020
(73) Patentinhaber: Audi AG, 85045 Ingolstadt (DE)
(72) Erfinder: KIESEWETTER, Jürgen, 91781 Weißenburg i. Bay (DE)
(86) Internationale Anmeldenummer: PCT/EP2018/082567
(87) Internationale Veröffentlichungsnummer: WO 2019/115215

(56) Entgegenhaltungen:
- DE-A1- 10 232 808
- DE-A1-102010 021 057
- KR-B1- 100 412 376

## Beschreibung

Die Erfindung betrifft eine Gangschaltkupplung für ein Fahrzeuggetriebe nach dem Oberbegriff des Anspruches 1.

Bei einem herkömmlichen Doppelkupplungsgetriebe ist im Fahrbetrieb eine erste Trennkupplung kraftübertragend geschaltet und ein Fahrgang eingelegt, dessen Zahnradsatz für eine Drehmomentübertragung lasttragend ist. Ein weiterer Fahrgang wird vorgewählt, dessen Zahnradsatz noch lastfrei ist. Bei einem Schaltvorgang wird die erste Trennkupplung gelöst und eine zweite Trennkupplung kraftübertragend geschaltet, wodurch der Zahnradsatz des vorgewählten Fahrgangs für eine Drehmomentübertragung lasttragend ist. Ein solches Doppelkupplungsgetriebe ist im Zahnradraum grundsätzlich mit der gleichen Technologie wie ein Handschaltgetriebe aufgebaut, bei der eine Gangschaltkupplung einen wellenfest auf einer Getriebewelle angeordneten Synchronkörper aufweist. Auf dessen Außenverzahnung ist eine Schiebemuffe mit ihrer Innenverzahnung axial geführt. Die Schiebemuffe wird in einem Gangschaltvorgang in Axialbewegung in Zahneingriff mit einer Außenverzahnung eines Loszahnrads gebracht, um eine Drehmomentübertragung zwischen der Getriebewelle und dem Loszahnrad herzustellen. In einer gattungsgemäßen Gangschaltkupplung ist der Zahneingriff zwischen der Schiebemuffen-Innenverzahnung und der Loszahnrad-Außenverzahnung mit einem Drehspiel spielbehaftet. Bei der Einleitung eines Drehmoments und/oder bei einem Lastwechsel kommen die einander zugewandten Zahnflanken der Schiebemuffen-Innenverzahnung und der Loszahnrad-Außenverzahnung unter Aufbrauch dieses Drehspiels miteinander in Anschlag.

Das obige Drehspiel bzw. Zahnflankenspiel zwischen den Zahnflanken ist erforderlich, um beim Gangschaltvorgang eine betriebssichere Ankopplung des Loszahnrads zu gewährleisten. Ein solches Drehspiel kann allerdings speziell bei einem Doppelkupplungsgetriebe zu Klack- und Klappengeräuschen führen, sofern Drehschwingungen eingebracht werden oder es zu Lastwechseln kommt. Die Geräusche entstehen durch das Aneinanderschlagen der einander zugewandten Zahnflanken der Schiebemuffen-Innenverzahnung und der Loszahnrad-Außenverzahnung.

Derartige Gangschaltkupplungen, insbesondere Synchronkupplungen sind beispielhaft aus der DE 10 2014 213 133 B4, DE 195 45 519 B4, DE 102 32 808, KR 100 412 376 B1 oder aus der DE 10 2010 021057 A1 bekannt.

Aus der DE 10 2007 059 843 A1 ist ein Verfahren zur Herstellung einer Schiebemuffe für eine Gangschaltkupplung bekannt. Demzufolge wird zunächst ein geradliniger Bandstreifen mit einer die Innenverzahnung bildenden Verzahnung an einer Flachseite und wenigstens einer die Außennut bildenden Längsnut an der gegenüberliegenden Flachseite hergestellt. Anschließend erfolgt ein Umformen, bei dem der geradlinige Bandstreifen zu einem geschlossenen Ring mit der Innenverzahnung und mit der Außennut rundgebogen wird.

Die Aufgabe der Erfindung besteht darin, eine Gangschaltkupplung für ein Fahrzeuggetriebe bereitzustellen, bei der in baulich einfacher Weise Klack- oder Klappergeräusche bei einem Lastwechsel im Fahrzeuggetriebe vermieden werden können.

Die Aufgabe ist durch die Merkmale des Anspruches 1 gelöst. Bevorzugte Weiterbildungen der Erfindung sind in den Unteransprüchen offenbart.

Gemäß dem kennzeichnenden Teil des Anspruches 1 ist zwischen der Schiebemuffe und dem Loszahnrad zumindest eine Dämpfungsfeder zwischengeordnet, mittels der eine Anschlagbewegung der einander zugewandten Zahnflanken gedämpft wird. Aufgrund der gedämpften Anschlagbewegung können die Klack- oder Klappergeräusche beim Schaltvorgang zuverlässig reduziert bzw. verhindert werden, da das Aneinanderschlagen der einander zugewandten Zahnflanken mittels der Dämpfungsfeder gedämpft wird.

Die Schiebemuffe der Gangschaltkupplung ist in einer Neutralstellung außer Zahneingriff mit der Loszahnrad-Außenverzahnung. In der Neutralstellung ist bevorzugt die Dämpfungsfeder außer Eingriff mit der Loszahnrad-Außenverzahnung und somit funktionslos. In einer bauraumgünstigen technischen Umsetzung kann die Dämpfungsfeder an der Innenverzahnung der Schiebemuffe positioniert und/oder befestigt sein. In einer ersten Ausführungsvariante kann in der Schiebemuffen-Schaltstellung, in einer Umlaufrichtung betrachtet, mit entgegengerichteten Federkräften zwischen einander gegenüberliegenden Zahnflanken zweier benachbarter Zähne der Loszahnrad-Außenverzahnung elastisch nachgiebig abgestützt sein. Bei einer erfolgenden Drehmomentübertragung und/oder bei einem Lastwechsel oder beim Einbringen von Drehschwingungen können die einander zugewandten Zahnflanken der Schiebemuffen-Innenverzahnung und der Loszahnrad-Außenverzahnung unter Aufbau elastischer Feder-Rückstellkräfte miteinander in Anschlag kommen.

Die obige Funktionsweise ist durch eine als Blattfeder realisierte Dämpfungsfeder bewerkstelligt geschafft. Die zumindest eine Blattfeder mit einer Federflanke elastisch nachgiebig drückt gegen eine der Blattfeder zugewandte Zahnflanke der Loszahnrad-Außenverzahnung. Bevorzugt weist die Dämpfungsfeder insgesamt zwei Blattfedern auf, deren Federflanken elastisch nachgiebig aufeinander zugewandte Zahnflanken der Loszahnrad-Außenverzahnung drücken.

Im Hinblick auf eine packagegünstige Bereitstellung eines Bauraums für die Dämpfungsfeder kann in der Schiebemuffen-Innenverzahnung zumindest ein Innenzahn entfallen und anstelle dessen Dämpfungsfeder angeordnet sein.

Im Hinblick auf einen leichtgängigen Schaltvorgang kann es bevorzugt sein, wenn die Dämpfungsfeder nicht in Anlage mit einem Zahngrund der Loszahnrad-Außenverzahnung ist, sondern vielmehr um einen freien Radialversatz davon beabstandet ist. Alternativ dazu kann die an der Schiebemuffen-Innenverzahnung positionierte Dämpfungsfeder sich nicht gegen die einander zugewandten Zahnflanken der Loszahnrad-Außenverzahnung abstützen, sondern vielmehr elastisch nachgiebig auf dem Zahngrund der Loszahnrad-Außenverzahnung abgestützt sein. In diesem Fall wirkt die Dämpfungsfeder nicht in der Umlaufrichtung, sondern vielmehr in der Radialrichtung.

In einer bevorzugten Weiterbildung kann die Dämpfungsfeder so ausgelegt sein, dass sich in der Schiebemuffen-Schaltstellung sowie bei noch lastfreier Gangschaltkupplung der folgende Sachverhalt einstellt: so kann in diesem Fall die Dämpfungsfeder die Schiebemuffe und das Loszahnrad zueinander zentrieren, so dass sämtliche Zahnflanken der Schiebemuffen-Innenverzahnung und der Loszahnrad-Außenverzahnung über ein Zentrierspiel voneinander beabstandet sind. Bei einer Lasteinleitung in die geschaltete Gangschaltkupplung können unter kompletten Aufbrauch des Zentrierspiels die Zahnflanken der Schiebemuffen-Innenverzahnung (gedämpft) mit den Zahnflanken der Loszahnrad-Außenverzahnung aneinander schlagen.

Die obige Erfindung ist insbesondere bei einem Doppelkupplungsgetriebe anwendbar, bei dem im Fahrbetrieb eine erste Trennkupplung kraftübertragend geschaltet ist sowie ein Fahrgang eingelegt ist, dessen Zahnradsatz für eine Drehmomentübertragung bereits lasttragend ist, sowie ein weiterer Fahrgang vorgewählt ist, dessen Zahnradsatz noch lastfrei ist. Bei einem Schaltvorgang wird die erste Trennkupplung gelöst und eine zweite Trennkupplung kraftübertragend geschaltet. In diesem Fall erfolgt ein Lastwechsel, bei dem der Zahnradsatz des vorgewählten Fahrgangs für eine Drehmomentübertragung lasttragend wird. Aufgrund der Dämpfungsfeder erfolgt der Lastwechsel jedoch weitgehend frei von Klack- oder Klappergeräuschen.

Nachfolgend werden Ausführungsbeispiele der Erfindung anhand der beigefügten Figuren beschrieben.

Es zeigen:
- Figur 1: einen Längshalbschnitt durch eine Doppelsynchronkupplung für ein Schaltgetriebe eines Kraftfahrzeugs mit einem wellenfesten Synchronkörper, einer darauf über Verzahnungen geführten Schaltmuffe, Synchronringen und auf Loszahnrädern angeordneten Loszahnrad-Verzahnungen;
- Figur 2: eine schematische Teilansicht auf die Innenverzahnung der Schiebemuffe in einer Neutralstellung;
- Figur 3: eine Ansicht entsprechend der Figur 2 in einer Schaltstellung der Schiebemuffe;
- Figur 4: eine schematische Teilschnittdarstellung entlang der Schnittebene A-A aus der Figur 3; und
- Figur 5: eine Ansicht entsprechend der Figur 4 gemäß einem zweiten Ausführungsbeispiel.

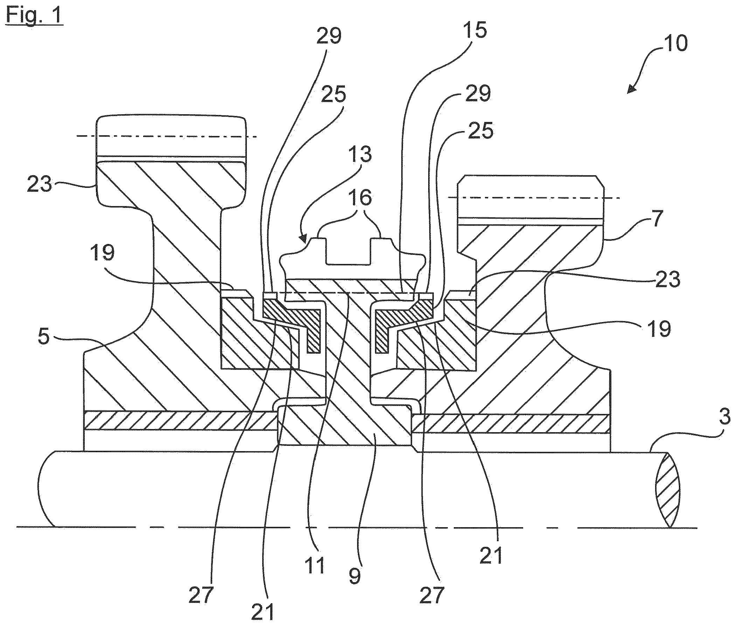

In der Figur 1 ist eine obere Hälfte einer im Wesentlichen bekannten Doppelsynchronkupplung 1 für ein Fahrzeuggetriebe dargestellt, die auf einer Getriebewelle 3 zwischen zwei Loszahnrädern 5, 7 angeordnet ist.

Die Synchronkupplung 1 weist einen mittleren Synchronkörper 9 auf, der wellenfest auf der Getriebewelle gehalten ist, während die axial benachbarten Loszahnräder 5, 7 über Nadellager drehbar auf der Getriebewelle 3 gelagert sind.

Der Synchronkörper 9 ist mit einer Außenverzahnung 11 versehen, auf der eine Schiebemuffe 13 mit ihrer Innenverzahnung 15 in Axialrichtung verschiebbar geführt ist. Die Schiebemuffe 13 kann in üblicher Weise über eine in eine Außennut 16 eingreifende Schaltgabel einer Schaltvorrichtung (nicht dargestellt) aus der gezeigten Mittelstellung (das heißt Neutralstellung) heraus nach links oder nach rechts zum Schalten eines Ganges verschoben werden.

Jedes der Loszahnräder 5, 7 trägt einen Kupplungskörper 19 mit einem Außenkonus 21 und einer Außenverzahnung 23, die mit der Schiebemuffen-Innenverzahnung 15 in Zahneingriff bringbar ist.

Zwischen den mit den Loszahnrädern 5, 7 fest verbundenen Kupplungskörpern 19 und dem Synchronkörper 9 sind Synchronringe 25 mit jeweils einem Reibkonus 27 und einer Sperrverzahnung 29 eingesetzt, die in bekannter Weise begrenzt axial verschiebbar und verdrehbar am Synchronkörper 9 geführt sind. Zum Schalten eines Ganges bzw. zum Kuppeln eines Loszahnrads 5, 7 an die Getriebewelle 3 wird die Schiebemuffe 13 axial verschoben, wobei zunächst über den entsprechenden Synchronring 25 ein Gleichlauf hergestellt wird. Durch den Gleichlauf wird die Sperrverzahnung 29 des Synchronrings 25 wirkungslos und kann die Schiebemuffe 13 über die Sperrverzahnung 29 hinweg in Eingriff mit der Außenverzahnung 17 des betreffenden Loszahnrads 5, 7 gebracht werden.

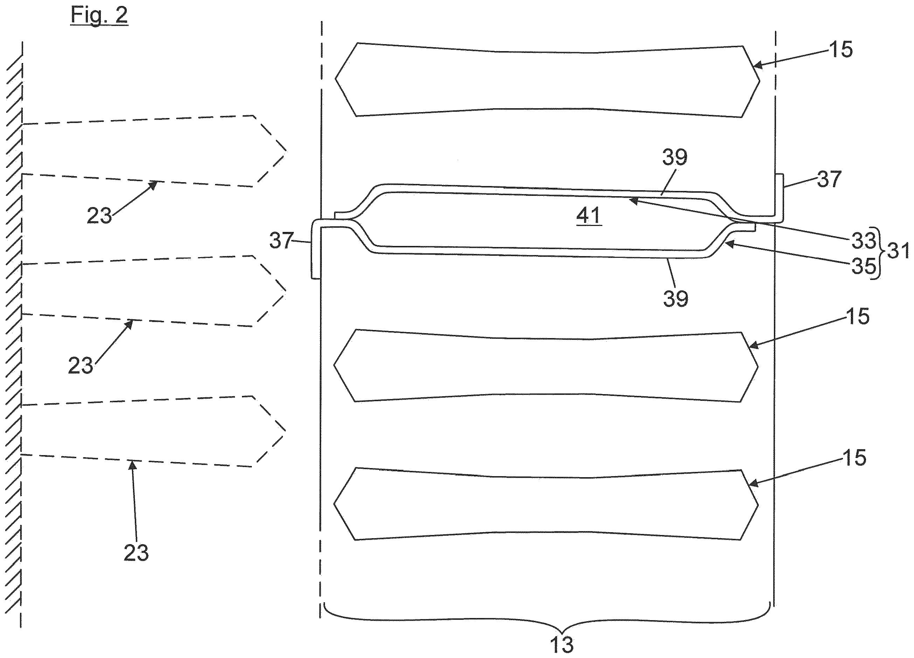

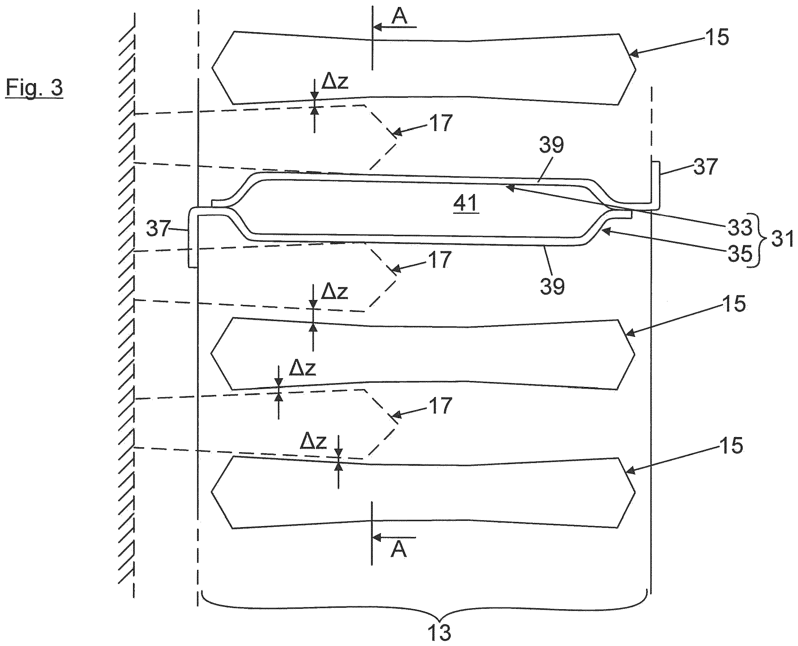

In den Figuren 2 und 3 sind die Innenverzahnung 15 der Schiebemuffe sowie in gestrichelter Linie die Außenverzahnung 17 der Loszahnräder 5, 7 dargestellt. Diese sind in der Schiebemuffen-Neutrallstellung (Figur 2) außer Zahneingriff und in der Schiebemuffen-Schaltstellung (Figur 3) in Zahneingriff gebracht. Zur besseren Übersicht ist in den Figuren 2 und 3 die Sperrverzahnung 29 der Synchronringe 25 nicht eingezeichnet. Wie aus den Figuren 2 und 3 hervorgeht, ist an der Schiebemuffen-Innenverzahnung eine Dämpfungsfeder 31 verbaut, die mit zwei Blattfedern 33 und 35 realisiert ist. Die Blattfedern 33, 35 sind mit ihren axial äußeren Federfußpunkten 37 an axial gegenüberliegenden Stirnseiten der Schiebemuffe 13 befestigt. Zur Bereitstellung eines Bauraums für die beiden Blattfedern 33, 35 entfällt in der Innenverzahnung 15 der Schiebemuffe 13 ein Innenzahn und sind anstelle dessen die beiden Blattfedern 33, 35 angeordnet.

Die beiden Blattfedern 33, 35 weisen jeweils eine elastisch biegsame Federflanke 39 auf, die beide in Umlaufrichtung zueinander gegensinnig nach außen gekrümmt sind und nach innen einen freien Verformungsraum begrenzen, in den sich die beiden Federflanken 39 im Schaltzustand (Figur 3) hineinverformen können. In der in der Figur 2 gezeigten Neutralstellung sind die beiden Blattfedern 33, 35 sowie die Schiebemuffen-Innenverzahnung 15 außer Zahneingriff mit der Loszahnrad-Außenverzahnung und alleine in Zahneingriff mit der Außenverzahnung 11 des Synchronkörpers 9.

Bei einem Schaltvorgang wird die Schiebemuffe 13 in Axialbewegung in einen spielbehafteten Zahneingriff mit der Loszahnrad-Außenverzahnung 17 gebracht, um eine Drehmomentübertragung zwischen der Getriebewelle 3 und dem Loszahnrad 5 zu ermöglichen, wie es in der Figur 3 angedeutet ist.

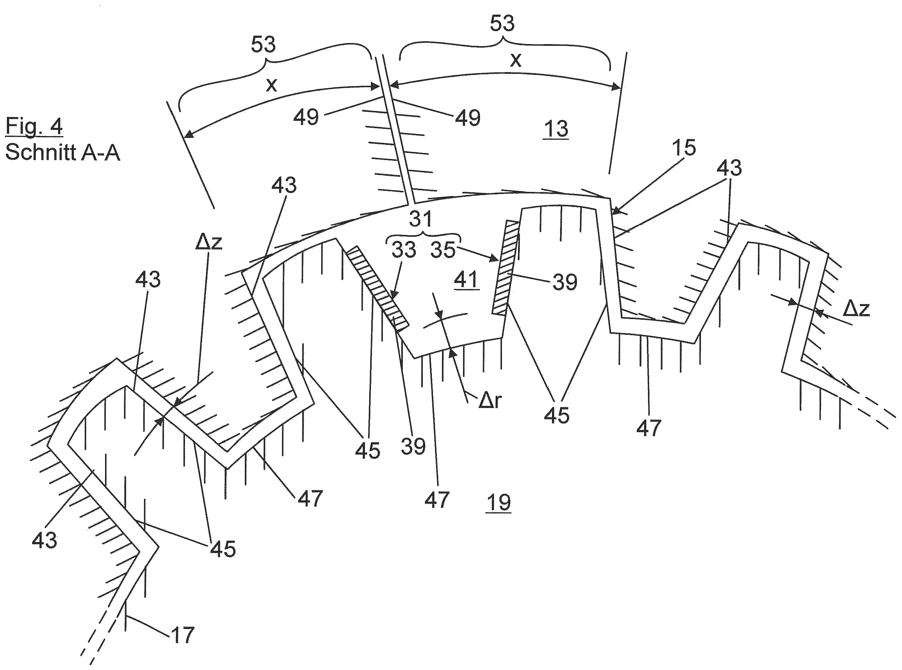

In den Figuren 3 und 4 ist die Schiebemuffe 13 in ihrer Schaltstellung gezeigt, wobei die Doppelsynchronkupplung 1 noch lastfrei ist, das heißt noch nicht mit einem Drehmoment beaufschlagt ist. In diesem Fall zentrieren die beiden Blattfedern 33, 35 die Schiebemuffe 13 und das Loszahnrad 5 zueinander, so dass die Zahnflanken 43 der Schiebemuffen-Innenverzahnung 15 und die Zahnflanken 45 der Loszahnrad-Außenverzahnung 17 über ein Zentrierspiel Δz voneinander beabstandet sind.

Bei einer Lasteinleitung werden die Zahnflanken 43, 45 der Schiebemuffen-Innenverzahnung 15 und der Loszahnrad-Außenverzahnung 11 unter Aufbrauch des Zentrierspiel Δz sowie unter gleichzeitigem Aufbau einer Rückstellkraft in den beiden Blattfedern 33, 35 miteinander in Anschlag gebracht. Die Anschlagbewegung der Zahnflanken 43, 45 wird dabei von der Dämpfungsfeder 31 gebremst bzw. gedämpft, so dass Klack- oder Klappergeräusche beim Aneinanderschlagen der Zahnflanken 43, 45 verhindert werden können.

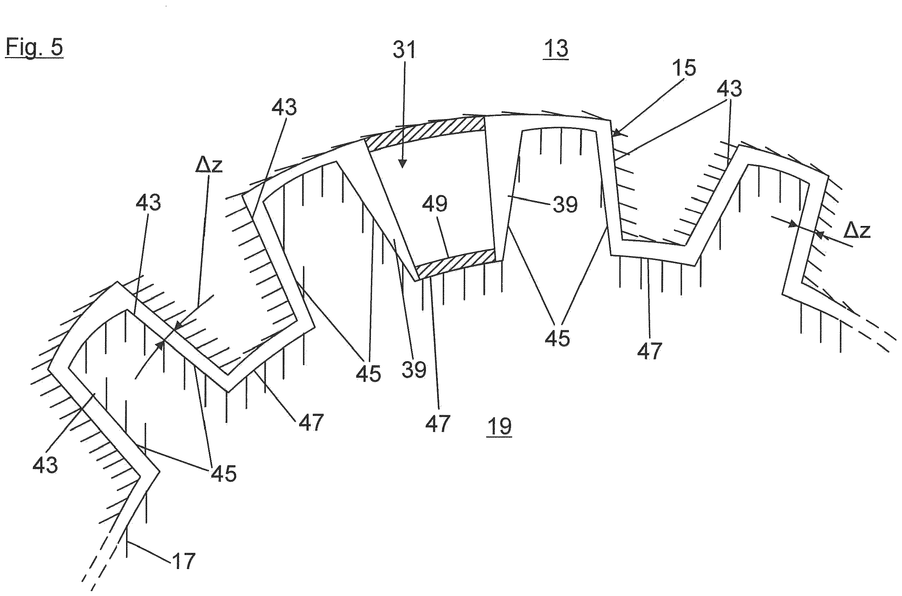

In der Figur 5 ist ein zweites Ausführungsbeispiel gezeigt, bei der Dämpfungsfeder 31 ebenfalls als eine Blattfeder realisiert ist. Im Unterschied zu den vorangegangenen Figuren ist jedoch die Dämpfungsfeder 31 im Schaltzustand nicht in elastisch nachgiebiger Anlage mit den Zahnflanken 45 der Loszahnrad-Außenverzahnung 11, sondern vielmehr mit dem Zahngrund 47 der Loszahnrad-Außenverzahnung 11. In den vorangegangenen Figuren ist die Dämpfungsfeder 31 dagegen über einen freien Radialversatz Δr von dem Zahngrund 47 der Loszahnrad-Außenverzahnung 45 beabstandet.

Die in den vorangegangenen Figuren beschriebene Schiebemuffe 13 wird bevorzugt wie folgt hergestellt: So wird zunächst ein geradliniger Bandstreifen bereitgestellt, der an einer Flachseite eine die Innenverzahnung 15 bildende Verzahnung und an der gegenüberliegenden Flachseite eine die Außennut 16 bildende Längsnut aufweist. Dann wird der Bandstreifen ringförmig umgeformt, d.h. rundgebogen, und an seinen stirnseitigen Bandstreifenenden 49 (Figur 4) zusammengefügt. Die Fügeverbindung kann beispielhaft als eine Schwalbenschanzverbindung realisiert sein, in der die Bandstreifenenden 49 zusätzlich miteinander verschweißt sind.

Bei dem oben beschriebenen Herstellungsprozess ist es bevorzugt, wenn sich die die Innenverzahnung 15 bildende Verzahnung nicht bis unmittelbar zum jeweiligen Bandstreifenende 49 erstreckt, sondern die Verzahnung in Richtung auf das jeweilige Bandstreifenende 49 in einen verzahnungsfreien, glattflächigen Bandabschnitt 53 übergeht, wie es in der Figur 4 angedeutet ist. Demzufolge erstrecken sich die beiden Bandabschnitte 53 über ein Längenmaß x und schließen diese unmittelbar am jeweiligen Bandstreifenende 49 ab. Zudem erstrecken sich die beiden verzahnungsfreien, glattflächigen Bandabschnitte 53 auf dem gleichen Durchmesser wie der Zahngrund der Innenverzahnung 15. Mittels der verzahnungsfreien, glattflächigen Bandabschnitte 53 wird fertigungstechnisch einfach ein Bauraum für die Dämpfungsfeder 31 bereitgestellt.

## Patentansprüche

1. Gangschaltkupplung für ein Fahrzeuggetriebe, mit einer Getriebewelle (3) mit einem wellenfesten Synchronkörper (9), auf dessen Außenverzahnung (11) eine Schiebemuffe (13) mit ihrer Innenverzahnung (15) axial geführt ist, wobei die Schiebemuffe (13) in einem Schaltzustand in einer Axialbewegung in Zahneingriff mit einer Außenverzahnung (17) eines Loszahnrads (5, 7) gebracht ist, um eine Drehmomentübertragung zwischen der Getriebewelle (3) und dem Loszahnrad (5, 7) herzustellen, und wobei der Zahneingriff zwischen der Schiebemuffen-Innenverzahnung (15) und der Loszahnrad-Außenverzahnung (17) spielbehaftet ist, und zwar mit einem Zahnflankenspiel (Δz), und wobei bei der Drehmomentübertragung die einander zugewandten Zahnflanken (43, 45) der Innenverzahnung (15) der Schiebemuffe (13) und der Außenverzahnung (17) des Loszahnrads (5, 7) unter Aufbrauch des Zahnflankenspiels (Δz) miteinander in Anschlag kommen, wobei zwischen der Schiebemuffe (13) und dem Loszahnrad (5, 7) zumindest eine Dämpfungsfeder (31) wirkt, mittels der eine Anschlagbewegung der einander zugewandten Zahnflanken (43, 45) gedämpft wird, **dadurch gekennzeichnet, dass** die Dämpfungsfeder (31) zumindest eine Blattfeder (33, 35) aufweist, und dass die Dämpfungsfeder (31) mit einer Federflanke (39) elastisch nachgiebig gegen eine der Blattfeder (33, 35) zugewandte Zahnflanke (45) der Loszahnrad-Außenverzahnung (17) drückt.

2. Gangschaltkupplung nach Anspruch 1, **dadurch gekennzeichnet, dass** die Dämpfungsfeder (31) an der Innenverzahnung (15) der Schiebemuffe (13) angebunden ist, und/oder dass die Dämpfungsfeder (31) im Schaltzustand in einer Umlaufrichtung mit entgegen gerichteten Federkräften auf gegenüberliegende Zahnflanken (43, 45) zweier benachbarter Zähne der Außenverzahnung (17) des Loszahnrads (5, 7) wirkt, und dass bei einer Drehmomentübertragung die einander zugewandten Zahnflanken (43, 45) der Schiebemuffen-Innenverzahnung (15) und der Loszahnrad-Außenverzahnung (17) unter Aufbau einer elastischen Feder-Rückstellkraft in Anschlag kommen, und zwar mit einer gedämpften oder gebremsten Anschlagbewegung.

3. Gangschaltkupplung nach Anspruch 1 oder 2, **dadurch gekennzeichnet, dass** die Dämpfungsfeder (31) zwei Blattfedern (33, 35) aufweist, deren Federflanken (39) elastisch nachgiebig auf einander zugewandte Zahnflanken (45) der Außenverzahnung (17) des Loszahnrads (5, 7) drücken.

4. Gangschaltkupplung nach einem der vorhergehenden Ansprüche, **dadurch gekennzeichnet, dass** zur Bereitstellung eines Bauraums für die Dämpfungsfeder (31) in der Innenverzahnung (15) der Schiebemuffe (13) zumindest ein Zahn entfällt und anstelle dessen die Dämpfungsfeder (31) angeordnet ist.

5. Gangschaltkupplung nach einem der vorhergehenden Ansprüche, **dadurch gekennzeichnet, dass** in einer Neutralstellung die Schiebemuffe (13) außer Zahneingriff mit der Loszahnrad-Außenverzahnung (17) ist, und dass in der Neutralstellung die Dämpfungsfeder (31) funktionslos ist.

6. Gangschaltkupplung nach einem der vorhergehenden Ansprüche, **dadurch gekennzeichnet, dass** die Dämpfungsfeder (31) um einen freien Radialversatz (Δr) von einem Zahngrund (47) der Loszahnrad-Außenverzahnung (17) beabstandet ist.

7. Gangschaltkupplung nach einem der Ansprüche 1 bis 5, **dadurch gekennzeichnet, dass** die Dämpfungsfeder (31) eine Federflanke (49) aufweist, die im Schaltzustand elastisch nachgiebig auf einem Zahngrund (47) zwischen zwei benachbarten Zähnen der Loszahnrad-Außenverzahnung (17) abgestützt ist.

8. Gangschaltkupplung nach einem der vorhergehenden Ansprüche, **dadurch gekennzeichnet, dass** im Schaltzustand sowie bei lastfreier Gangschaltkupplung die Dämpfungsfeder (31) die Schiebemuffe (13) und das Loszahnrad (5, 7) zueinander zentriert, so dass sämtliche Zahnflanken (43, 45) der Schiebemuffe-Innenverzahnung (15) und der Loszahnrad-Außenverzahnung (17) über ein Zentrierspiel (Δz) voneinander beabstandet sind.

9. Gangschaltkupplung nach einem der vorhergehenden Ansprüche, **dadurch gekennzeichnet, dass** das Fahrzeuggetriebe ein Doppelkupplungsgetriebe ist, bei dem im Fahrbetrieb eine erste Trennkupplung kraftübertragend geschaltet ist und ein Fahrgang eingelegt ist, dessen Zahnradsatz für eine Drehmomentübertragung lasttragend ist, sowie ein weiterer Fahrgang voreingestellt ist, dessen Zahnradsatz noch lastfrei ist, und dass bei einem Schaltvorgang die erste Trennkupplung gelöst wird und eine zweite Trennkupplung kraftübertragend geschaltet wird, wodurch der Zahnradsatz des voreingestellten Fahrgangs für eine Drehmomentübertragung lasttragend ist.

10. Gangschaltkupplung nach einem der vorhergehenden Ansprüche, **dadurch gekennzeichnet, dass** die Schiebemuffe (13) aus einem geradlinigen Bandstreifen hergestellt ist, der an einer Flachseite eine die Innenverzahnung (15) bildende Verzahnung aufweist, wobei der Bandstreifen ringförmig umgeformt, d.h. rundgebogen, ist und an seinen stirnseitigen Bandstreifenenden (49) zusammengefügt ist, und dass die die Innenverzahnung (15) bildende Verzahnung in Richtung auf zumindest ein Bandstreifenende (49) in einen verzahnungsfreien, glattflächigen Bandabschnitt (53) übergeht, der unmittelbar am Bandstreifenende (49) abschließt, und dass der verzahnungsfreie glattflächige Bandabschnitt (53) den Bauraum für die Dämpfungsfeder (31) bereitstellt.

11. Verfahren zur Herstellung einer Schiebemuffe (13) für eine Gangschaltkupplung nach einem der vorhergehenden Ansprüche, mit einer Gangschaltkupplung nach einem der vorhergehenden Ansprüche, mit den folgenden Schritten:
- Herstellen eines geradlinigen Bandstreifens mit einer die Innenverzahnung (15) bildenden Verzahnung an einer Flachseite und wenigstens einer die Außennut (16) bildenden Längsnut an der gegenüberliegenden Flachseite,
- Umformen des geradlinigen Bandstreifens zu einem geschlossenen Ring mit der Innenverzahnung (15) und der Außennut (16).

## Claims

1. Gear shifting coupling for a vehicle transmission, having a gear shaft (3) with a synchroniser drum (9) fixed to the shaft, on the outer toothing (11) of which synchroniser drum a sliding bush (13) is guided axially with its inner toothing (15), wherein the sliding bush (13) in a shifting state is brought in an axial movement into tooth engagement with an outer toothing (17) of a loose gearwheel (5, 7) in order to establish a torque transmission between the gear shaft (3) and the loose gearwheel (5, 7), and wherein the tooth engagement between the sliding bush inner toothing (15) and the loose gearwheel outer toothing (17) has clearance, specifically having a tooth flank clearance (Δz), and wherein during the torque transmission the tooth flanks (43, 45), facing one another, of the inner toothing (15) of the sliding bush (13) and of the outer toothing (17) of the loose gearwheel (5, 7) lose the tooth flank clearance (Δz) and come into abutment with one another, wherein between the sliding bush (13) and the loose gearwheel (5, 7) acts at least one damping spring (31), by means of which the one stop motion of the tooth flanks (43, 45) which face one another is damped, **characterised in that** the damping spring (31) has at least one leaf spring (33, 35), and that the damping spring (31) presses with a spring flank (39) in an elastically yielding manner against a tooth flank (45) of the loose gearwheel outer toothing (17), which tooth flank faces the leaf springs (33, 35).

2. Gear shifting coupling according to claim 1, **characterised in that** the damping spring (31) is connected to the inner toothing (15) of the sliding bush (13), and/or that the damping spring (31) in the shifting state acts in a direction of rotation with oppositely-directed spring forces on opposite tooth flanks (43, 45) of two adjacent teeth of the outer toothing (17) of the loose gearwheel (5, 7), and that in the case of a torque transmission the tooth flanks (43, 45), facing one another, of the sliding bush inner toothing (15) and of the loose gearwheel outer toothing (17) build up an elastic spring returning force and come into abutment, specifically with a damped or braked abutment movement.

3. Gear shifting coupling according to claim 1 or 2, **characterised in that** the damping spring (31) has two leaf springs (33, 35), the spring flanks (39) of which press in an elastically yielding manner against tooth flanks (45), facing one another, of the outer toothing (17) of the loose gearwheel (5, 7).

4. Gear shifting coupling according to any of the preceding claims, **characterised in that** for providing an installation space for the damping spring (31) at least one tooth is missing in the inner toothing (15) of the sliding bush (13) and in its place is arranged the damping spring (31).

5. Gear shifting coupling according to any of the preceding claims, **characterised in that** in a neutral position the sliding bush (13) is out of tooth engagement with the loose gearwheel outer toothing (17) and that in the neutral position the damping spring (31) is without function.

6. Gear shifting coupling according to any of the preceding claims, **characterised in that** the damping spring (31) is spaced from a tooth base (47) of the loose gearwheel outer toothing (17) by a free radial offset (Δr).

7. Gear shifting coupling according to any of claims 1 to 5, **characterised in that** the damping spring (31) has a spring flank (49), which in the shifting state is supported in an elastically yielding manner on a tooth base (47) between two adjacent teeth of the loose gearwheel outer toothing (17).

8. Gear shifting coupling according to any of the previous claims, **characterised in that** in the shifting state as well as in an unloaded state of the gear shifting coupling the damping spring (31) centres the sliding bush (13) and the loose gearwheel (5, 7) with respect to one another, such that all tooth flanks (43, 45) of the sliding bush inner toothing (15) and of the loose gearwheel outer toothing (17) are spaced from one another via a centring clearance (Δz).

9. Gear shifting coupling according to any of the previous claims, **characterised in that** the vehicle transmission is a dual clutch transmission, in which during drive operation a first disconnect coupling is shifted to be force transmitting and a drive gear is selected, the gearwheel set of which is load-bearing for a torque transmission, and a further drive gear is preset, the gearwheel set of which is still load free, and that in a first shifting procedure the first disconnect coupling is released and a second disconnect coupling is shifted to be force transmitting, as a result of which the gearwheel set of the preset drive gear is load-bearing for a torque transmission.

10. Gear shifting coupling according to any of the previous claims, **characterised in that** the sliding bush (13) is produced from a straight band strip which has on a flat side a toothing forming the inner toothing (15), wherein the band strip is annularly shaped, i.e. is circularly curved, and is joined together at its end face band strip ends (49), and that the toothing forming the inner toothing (15) transitions in the direction of at least one band strip end (49) into a toothing-free, smooth-surfaced band portion (53) which ends directly at the band strip end (49), and that the toothing-free, smooth-surfaced band portion (53) provides the installation space for the damping spring (31).

11. Method for producing a sliding bush (13) for a gear shifting coupling according to any of the preceding claims, having a gear shifting coupling according to any of the preceding claims, having the following steps:
- producing a straight band strip having a toothing, forming the inner toothing (15), on a flat side and having at least one longitudinal groove, forming the outer groove (16), on the oppositely-situated flat side,
- shaping the straight band strip to form a closed ring having the inner toothing (15) and the outer toothing (16).

## Revendications

1. Embrayage de changement de vitesse pour une boîte de vitesses de véhicule, avec un arbre de transmission (3) avec un corps de synchronisation (9) solidaire de l'arbre, sur la denture extérieure (11) duquel un manchon coulissant (13) est guidé axialement avec sa denture intérieure (15), dans lequel le manchon coulissant (13) est amené en engrènement avec une denture extérieure (17) d'une roue dentée libre (5, 7) dans un mouvement axial dans un état de commutation pour établir une transmission de couple entre l'arbre transmission (3) et la roue dentée libre (5, 7), et dans lequel l'engrènement entre la denture intérieure (15) du manchon coulissant et la denture extérieure (17) de la roue dentée libre est affecté d'un jeu, c'est-à-dire avec un jeu de flanc de dent (Δz), et dans lequel, lors de la transmission du couple, les flancs de dents tournés en vis-à-vis (43, 45) de la denture intérieure (15) du manchon coulissant (13) et de la denture extérieure (17) de la roue dentée libre (5, 7) viennent en butée les uns contre les autres, consommant le jeu de flancs de dents (Δz), dans lequel au moins un ressort d'amortissement (31) agit entre le manchon coulissant (13) et la roue dentée libre (5, 7), au moyen duquel un mouvement de butée des flancs de dents (43, 45) tournés en vis-à-vis est amorti, **caractérisé en ce que** le ressort d'amortissement (31) présente au moins un ressort à lame (33, 35), et **en ce que** le ressort d'amortissement (31) appuie avec un flanc de ressort (39) de manière élastiquement souple contre un flanc de dent (45), tourné vers le ressort à lame (33, 35) de la denture extérieure (17) de roue dentée libre.

2. Embrayage de changement de vitesse selon la revendication 1, **caractérisé en ce que** le ressort d'amortissement (31) est relié à la denture intérieure (15) du manchon coulissant (13), et/ou **en ce que** le ressort d'amortissement (31) agit à l'état décalé dans un sens de rotation avec des forces de ressort dirigées de manière opposée sur des flancs de dents opposés (43, 45) de deux dents adjacentes de la denture extérieure (17) de la roue dentée libre (5, 7), et **en ce que**, lors d'une transmission de couple, les flancs de dents tournés en vis-à-vis (43, 45) de la denture intérieure (15) du manchon coulissant et de la denture extérieure (17) de roue dentée libre viennent en butée avec la création d'une force de rappel de ressort élastique, à savoir avec un mouvement de butée amorti ou freiné.

3. Embrayage de changement de vitesse selon la revendication 1 ou 2, **caractérisé en ce que** le ressort d'amortissement (31) présente deux ressorts à lames (33, 35), dont les flancs de ressort (39) appuient de manière élastiquement souple sur des flancs de dents (45) tournés en vis-à-vis de la denture extérieure (17) de roue dentée libre (5, 7).

4. Embrayage de changement de vitesse selon l'une quelconque des revendications précédentes, **caractérisé en ce que**, pour ménager un espace de montage pour le ressort d'amortissement (31) dans la denture intérieure (15) du manchon coulissant (13), au moins une dent est supprimée et le ressort d'amortissement (31) est agencé à sa place.

5. Embrayage de changement de vitesse selon l'une quelconque des revendications précédentes, **caractérisé en ce que** dans une position neutre, le manchon coulissant (13) est hors d'engrènement avec la denture extérieure (17) de roue dentée libre, et **en ce que** dans la position neutre, le ressort d'amortissement (31) est inopérant.

6. Embrayage de changement de vitesse selon l'une quelconque des revendications précédentes, **caractérisé en ce que** le ressort d'amortissement (31) est espacé d'un décalage radial libre (Δr) par rapport à un fond de dent (47) de la denture extérieure (17) de roue dentée libre.

7. Embrayage de changement de vitesse selon l'une quelconque des revendications 1 à 5, **caractérisé en ce que** le ressort d'amortissement (31) présente un flanc de ressort (49) qui, dans l'état de commutation, s'appuie de manière élastiquement souple sur un fond de dent (47) entre deux dents adjacentes de la denture extérieure (17) de roue dentée libre.

8. Embrayage de changement de vitesse selon l'une quelconque des revendications précédentes, **caractérisé en ce que**, dans l'état de commutation et lorsque l'embrayage de changement de vitesse est sans charge, le ressort d'amortissement (31) centre le manchon coulissant (13) et la roue dentée libre (5, 7) l'un par rapport à l'autre, de sorte que tous les flancs de dents (43, 45) de la denture intérieure (15) de manchon coulissant et de la denture extérieure (17) de roue dentée libre sont espacés les uns des autres d'un jeu de centrage (Δz).

9. Embrayage de changement de vitesse selon l'une quelconque des revendications précédentes, **caractérisé en ce que** la transmission du véhicule est une transmission à double embrayage dans laquelle, pendant le service, un premier embrayage de séparation est engagé par transmission de puissance et un mode de déplacement est engagé dont le jeu d'engrenages est porteur pour une transmission de couple, et un autre mode de déplacement est préréglé dont le jeu d'engrenages est encore exempt de charge, et **en ce que**, pendant une opération de commutation, le premier embrayage de séparation est libéré et un second embrayage de séparation est commuté par transmission de puissance, le jeu d'engrenages du mode de déplacement préréglé étant porteur pour la transmission du couple.

10. Embrayage de changement de vitesse selon l'une quelconque des revendications précédentes, **caractérisé en ce que** le manchon coulissant (13) est fabriqué à partir d'une bande de ruban rectiligne qui présente, sur un côté plat, une denture formant la denture intérieure (15), dans lequel la bande de ruban est formée de manière annulaire, c'est-à-dire pliée en rond, et est reliée à ses extrémités de bande (49) frontales, et **en ce que** la denture formant la denture intérieure (15) se transforme en direction d'au moins une extrémité de bande (49) en une section de bande (53) sans denture, à surface lisse, qui se termine directement à l'extrémité de bande (49), et **en ce que** la section de bande (53) sans denture, à surface lisse, fournit l'espace de montage pour le ressort d'amortissement (31).

11. Procédé de fabrication d'un manchon coulissant (13) pour un embrayage de changement de vitesse selon l'une quelconque des revendications précédentes, avec un embrayage de changement de vitesse selon l'une quelconque des revendications précédentes, avec les étapes suivantes consistant à :
- fabriquer une bande rectiligne avec une denture formant la denture intérieure (15) sur un côté plat et au moins une rainure longitudinale formant la rainure extérieure (16) sur le côté plat opposé,
- former la bande rectiligne en un anneau fermé avec la denture intérieure (15) et la rainure extérieure (16).
